# FASCICULE DE BREVET EUROPEEN

(11) **EP 0 626 593 B1**
(45) Date de publication et mention de la délivrance du brevet: **08.10.1997**
(21) Numéro de dépôt: 94107681.2
(22) Date de dépôt: 18.05.1994
(51) Int. Cl.: G01V 1/00, G01D 3/028, B60S 1/08

(54) **Dispositif de détection ultra-sonore, notamment pour un système de nettoyage de pare-brise à commande automatique**
Ultraschalldetektionsgerät insbesondere für eine automatisch gesteuerte Windschutzreinigungsanlage
Ultrasonic detection apparatus in particular for an automatically controlled windshield cleaning system

(30) Priorité: 24.05.1993 EP 93108345; 25.10.1993 FR 9312682
(43) Date de publication de la demande: 30.11.1994
(73) Titulaire: ASULAB S.A., CH-2501 Bienne (CH)
(72) Inventeur: Wiget, Fridolin, CH-2000 Neuchâtel (CH)
(74) Mandataire: Patry, Didier Marcel Pierre

(56) Documents cités:
- EP-A- 0 321 146
- EP-A- 0 512 653
- DE-A- 4 033 975
- DE-A- 4 300 371
- DATABASE WPI Derwent Publications Ltd., London, GB; AN 93-181187 & SU-A-1 742 730

## Description

La présente invention concerne des dispositifs de détection ultrasonores et en particulier des dispositifs de détection ultrasonores pour détecter la présence de corps étrangers tels que de l'eau sur une vitre. Un tel dispositif de détection ultrasonore est destiné à être utilisé par exemple avec un système de nettoyage d'un pare-brise à commande automatique pour véhicule, et l'invention sera décrite ci-dessous en relation avec une telle application. Toutefois, on comprendra que l'invention n'est pas limitée à cette application.

Au cours des dernières années, on a proposé différents types de dispositifs de ce genre pour le nettoyage à commande automatique de vitre fonctionnant par détection ultrasonore de l'eau sur une surface.

On connait déjà de tels types de dispositif des documents DE-A-4 033 975, EP-A-0 321 146 et EP-A-0 512 653. Ce dernier document, par exemple, décrit un dispositif qui est fixé sur la surface intérieure du pare-brise d'un véhicule et qui comprend un transducteur qui émet une impulsion ultrasonore. Le dispositif reçoit et traite les impulsions réfléchies qui en résultent. En effet, l'impulsion ultrasonore se propage dans l'épaisseur du pare-brise et est soumise aux nombreuses réflexions internes sur l'interface entre l'intérieur et l'extérieur du pare-brise.

L'amplitude de ces réflexions diminue à un taux dépendant de la présence ou de l'absence d'eau sur le pare-brise. S'il n'y a pas d'eau sur la surface extérieure du pare-brise à l'endroit où la mesure est faite, le taux de réduction de l'amplitude de ces réflexions internes est inférieur à celui de l'endroit où l'eau est présente sur la surface extérieure du pare-brise. En mesurant l'amplitude des impulsions réfléchies détectées par le transducteur à un instant prédéterminé après l'émission de l'impulsion ultrasonore, et en effectuant une comparaison de cette amplitude avec une tension de référence prédéterminée, il est possible de déterminer s'il y a de l'eau sur la surface extérieure du pare-brise et donc d'activer ses essuies-glace.

Cependant, il a été constaté qu'en pratique cette façon d'aborder le problème n'est pas apte à fournir une indication sûre de l'absence ou de la présence d'eau sur le pare-brise. Un problème associé avec ce dispositif est que les signaux parasites qui peuvent résulter, par exemple, des changements du couplage du transducteur ou de l'impact des objets sur le pare-brise, peuvent changer l'amplitude de certaines impulsions réfléchies.

Un autre problème associé avec ce dispositif est la difficulté de maintenir la tension de référence à sa valeur prédéterminée, qui peut se modifier, par exemple, à cause d'une variation dans la température ambiante. L'amplitude de l'impulsion ultrasonore émise et le taux de réduction des impulsions réfléchies détectées, dépendent également de la température, car le circuit électronique chargé de les traiter est également dépendant de la température. De plus, le taux auquel l'amplitude de ces impulsions réfléchies diminue, est aussi influencé par la température des matériaux à travers lesquels passent les impulsions.

Ainsi, le dispositif décrit ci-dessus est soumis à de nombreuses sources d'erreurs différentes qui provoquent une indication incorrecte de la présence d'eau ou d'un autre corps étranger sur le pare-brise et par conséquent entraînent un fonctionnement inutile des essuie-glaces.

L'un des buts de la présente invention est de réaliser un dispositif de détection ultrasonore qui réduit ou supprime les inconvénients de l'art antérieur.

La présente invention a pour objet un dispositif de détection ultrasonore destiné à détecter la présence de corps étrangers, tel que de l'eau sur un pare-brise, comprenant des moyens de transduction pour émettre une séquence d'impulsions ultrasonores dans l'épaisseur de ladite fenêtre et pour recevoir une série d'impulsions réfléchies résultant de chacune desdites impulsions, les impulsions réfléchies dans chacune desdites séries, ont une amplitude qui détériore, à un taux qui varie en fonction de la présence desdits corps étrangers sur le pare-brise, lesdits moyens de transduction produisant un signal d'écho représentatif de chacune desdites séries d'impulsions réfléchies, caractérisé en ce qu'il comprend en outre des moyens d'amplification pour amplifier lesdits signaux d'écho par un gain sélectif, des moyens d'intégration pour intégrer chacun desdits signaux d'écho pendant une période sélectionnée de manière à produire une valeur intégrale, des moyens de commande d'amplification pour mesurer ladite valeur intégrale et pour sélectionner ledit gain de façon à maintenir ladite valeur intégrale à une valeur à régime établi, et des moyens pour mesurer la déviation temporelle de ladite valeur intégrale par rapport à ladite valeur à régime établi et pour déterminer si ladite déviation temporelle est supérieure à un seuil prédéterminé.

En intégrant une partie des signaux d'écho et en maintenant la valeur à régime établi de ce signal intégré constant pendant qu'on mesure la déviation temporelle de cette valeur à régime établi, un dispositif de détection ultrasonore et phonique qui détecte la présence d'eau sur un pare-brise mais qui réduit au minimum les effets du bruit parasite.et des variations de température et qui évite les difficultés associées avec l'utilisation d'une tension de référence.

La description qui va suivre indique plus en détail diverses caractéristiques de la présente invention. Pour faciliter la compréhension de la présente invention, il est fait référence aux dessins annexés où le dispositif de détection ultrasonore est illustré dans un mode d'exécution préféré dans la description. On comprendra que :
- la figure 1 est une vue partielle schématique de dessus d'un véhicule automobile équipé d'un dispositif de nettoyage à commande automatique ayant un dispositif de détection ultrasonore selon la présente invention;
- la figure 2 est un schéma-bloc d'un mode d'exécution d'un dispositif de détection ultrasonore selon la présente invention;
- la figure 3 est un diagramme d'un signal d'écho typique produit par le dispositif de détection ultrasonore de la figure 2 en l'absence d'eau sur la surface extérieure du pare-brise;
- la figure 4 est un diagramme d'un signal d'écho typique produit par le dispositif de détection ultrasonore de la figure 2 en présence d'eau sur la surface extérieure d'un pare-brise;
- la figure 5 est un diagramme du signal d'écho de la figure 3 comme il est intégré sur une période prédéterminée;
- la figure 6 est un diagramme du signal intégré de la figure 5; et
- la figure 7 est un diagramme du signal intégré résultant de l'émission d'une séquence d'impulsions ultrasonores par le dispositif de détection ultrasonore de la figure 2.

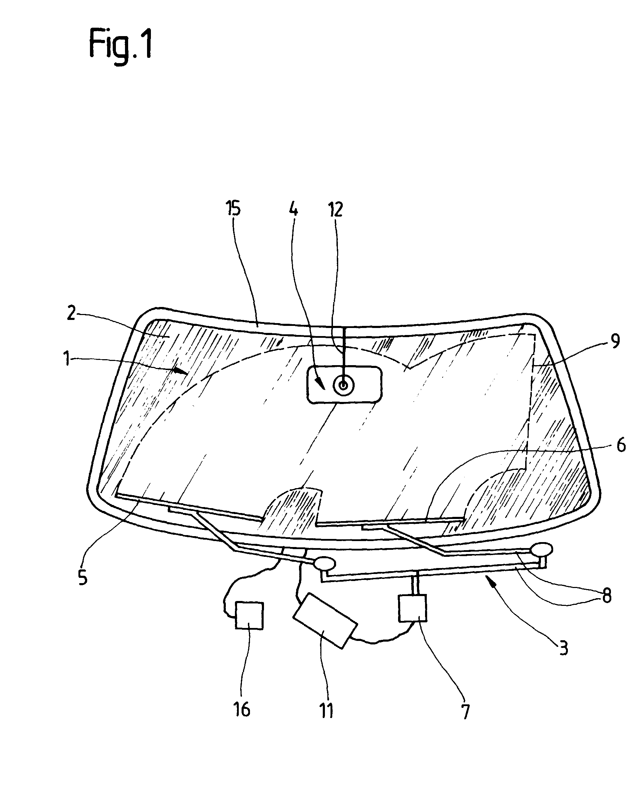

En se référant tout d'abord à la figure 1, on voit une vue schématique d'un pare-brise 1 d'un véhicule automobile équipé d'un dispositif de nettoyage à commande automatique ayant un dispositif de détection ultrasonore selon la présente invention. Le système de nettoyage est destiné à enlever des corps étrangers déposés sur la surface extérieure 2 du pare-brise 1. Dans cet exemple, l'expression "corps étrangers" indique des éléments comme de l'eau, de la neige, de la boue, etc., qui peuvent se déposer sur le pare-brise 1 et qui sont capables de brouiller le champ de vision du conducteur.

Le dispositif de nettoyage comprend un ensemble d'essuie-glaces 3 et un dispositif de détection ultrasonore 4 pour détecter la présence de corps étrangers sur le pare-brise. L'ensemble d'essuie-glace 3 comprend, de façon connue, deux balais 5 et 6 entraînés par un moteur 7 au moyen d'une tringlerie 8. Les balais 5 et 6 sont destinés à se déplacer sur la surface extérieure 2 du pare-brise 1 selon un mouvement alternatif en arc de cercle et définissent ainsi une zone prédéterminée 9 délimitée par des traits interrompus et représentant le champ de vision minimum que le conducteur doit avoir à sa disposition.

Le dispositif de détection ultrasonore 4 comprend essentiellement un transducteur 10 et un circuit électronique 11 associé à ce transducteur. Le transducteur 10 est fixé sur la face intérieure du pare-brise 1 et est relié électriquement au circuit 11 par l'intermédiaire d'un câble coaxial 12 qui passe le long du joint 15 du pare-brise 1. Un circuit d'alimentation 16 formé par exemple par la batterie du véhicule est aussi relié au circuit 11.

Le moteur 7 relié au circuit 11 sert à actionner les balais 5 et 6 quand le circuit 11 indique la présence d'eau ou d'un autre corps étranger sur la surface extérieure 2 du pare-brise. Le circuit 11 est, de préférence, réalisé sous une forme intégrée de manière à pouvoir être associé au transducteur 10 dans un ensemble unique.

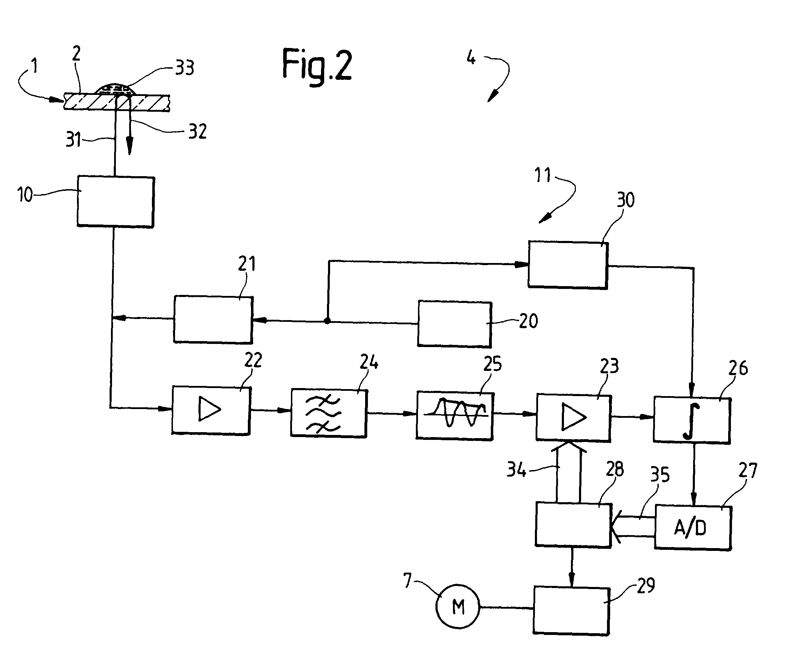

La figure 2 représente un schéma du dispositif de détection ultrasonore 4 et du moteur 7 de la figure 1. Le dispositif de détection ultrasonore 4 comprend le transducteur ultrasonore 10, un circuit d'horloge 20, un circuit de mise en forme 21, des circuits d'amplification 22 et 23, un filtre passe-bande 24, un détecteur d'enveloppe 25, un circuit d'intégration 26, un convertisseur analogique-numérique 27, un microprocesseur 28, un circuit d'attaque 29 et un circuit à fenêtre temporelle 30.

Le transducteur ultrasonore 10 peut être d'un type quelconque et est utilisé d'une part, pour émettre une séquence d'impulsions incidentes ultrasonores, dont chacune se propage dans l'épaisseur du pare-brise 1, et d'autre part, pour recevoir une série d'impulsions réfléchies résultant de la propagation de chaque impulsion émise. Le transducteur 10 peut avoir la configuration d'une pastille qui est réalisée en une céramique piézo-électrique tel que le titanate de plomb, les deux faces opposées de la pastille étant chacune recouverte d'une électrode destinée à être connectée au circuit 11. Le transducteur 10 est fixé sur la surface intérieure du pare-brise 1 de manière qu'il soit couplé efficacement avec cette surface pour minimiser ainsi les réflexions parasites à l'interface de fixation.

Le circuit d'horloge 20 transmet des impulsions au circuit de mise en forme 21, chaque impulsion ayant une durée de 50 à 200 nano-secondes. L'amplitude de ces impulsions est limitée par le circuit de mise en forme 21 à une valeur fixe, qui peut être de 10 volts par exemple. Les impulsions du circuit de mise en forme 21 sont appliquées au transducteur 10 par l'intermédiaire de ses électrodes et, cette excitation crée au transducteur 10 une séquence d'impulsions incidentes ultrasonores 31. Ces impulsions peuvent avoir toute fréquence de répétition convenable quelconque par exemple de l'ordre de 2,56 kHz. Elles se propagent dans l'épaisseur du pare-brise et subissent un grand nombre de réflexions internes entre la surface intérieure et la surface extérieure du pare-brise 1.

La proportion de l'énergie réfléchie par rapport à l'énergie émise de ces impulsions pendant ces réflexions internes sur le pare-brise varie selon les matériaux formant l'interface à laquelle les impulsions sont réfléchies/émises. Si l'interface se situe entre la surface extérieure du pare-brise et de l'air, une plus grande proportion d'impulsions est réfléchie vers le transducteur 10 que si l'interface se situe entre la surface extérieure du pare-brise et de l'eau. Ainsi, l'amplitude des impulsions réfléchies 32 détectées par le transducteur 10 après l'émission de chaque impulsion ultrasonore 31, se réduira à un taux dépendant de la présence ou de l'absence d'un corps étranger, tel que de l'eau, sur la surface extérieure 2 du pare-brise 1.

Le signal d'"écho" électrique créé entre les électrodes du transducteur 10 et résultant de la détection des séries d'impulsions réfléchies après l'émission de chaque impulsion incidente 31, est appliqué à l'amplificateur 22 pour être traité par le circuit 11. De cette façon, chaque signal d'écho produit présente une tension de crête de l'ordre de 5 millivolts. L'amplificateur 22 a un gain de 40 dB, par exemple et transforme le signal d'écho d'une tension de crête de 5 millivolts en une tension de crête de 500 millivolts. L'amplificateur 22 est conçu pour subir sans dommages la tension présente à la sortie du circuit de mise en forme 21. Le filtre 24 a une bande passante de 3 à 5 MHz et supprime le bruit parasite des signaux d'écho.

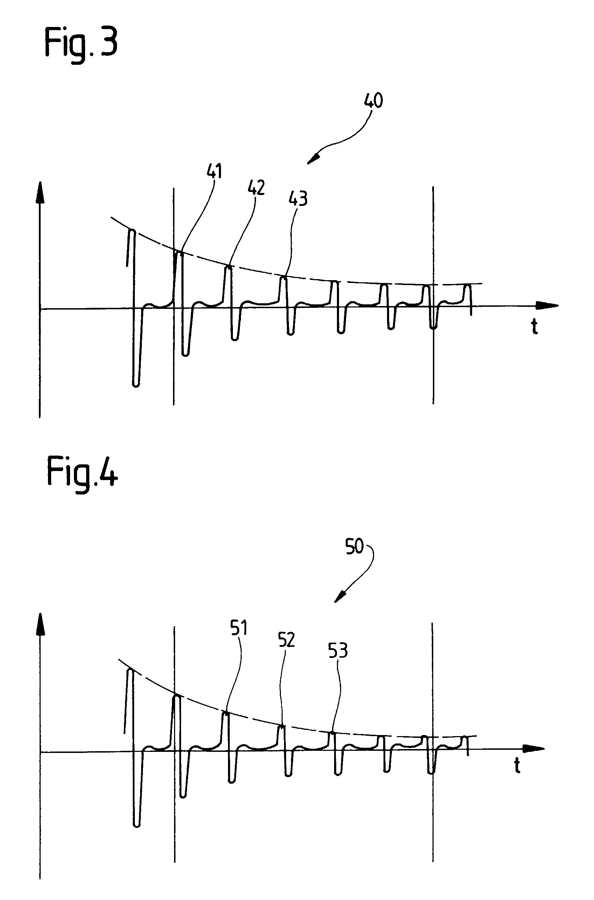

La figure 3 montre un signal d'écho 40 typique pour un interface pare-brise/air, ce signal étant mesuré à la sortie du filtre passe-bande 24 et ayant des impulsions telles que celles désignées par les références 41, 42 et 43. La figure 4 montre un signal d'écho 50 typique pour un interface pare-brise/eau, signal qui est également mesuré à la sortie du filtre passe-bande 24, et qui présente des impulsions telles que celles désignées par les références 51, 52 et 53. Comme on peut le voir en se référant à ces deux figures, l'amplitude des impulsions de chaque signal d'écho est plus rapidement atténuée si de l'eau 33 est présente sur la surface extérieure 2 du pare-brise 1, que si l'eau 33 est absente.

Au lieu de déterminer le taux d'atténuation de chaque signal d'écho par la mesure directe de l'amplitude d'une ou de plusieurs de ces impulsions à un instant fixe après l'émission d'une impulsion incidente ultrasonore 31, les signaux d'écho suivants reçus du transpondeur 10 sont intégrés, tandis que la valeur en régime permanent de cette. cette intégrale, est maintenue constante, la nomination dans le temps de cette valeur en régime permanent est mesurée. Cette procédure sera maintenant expliquée.

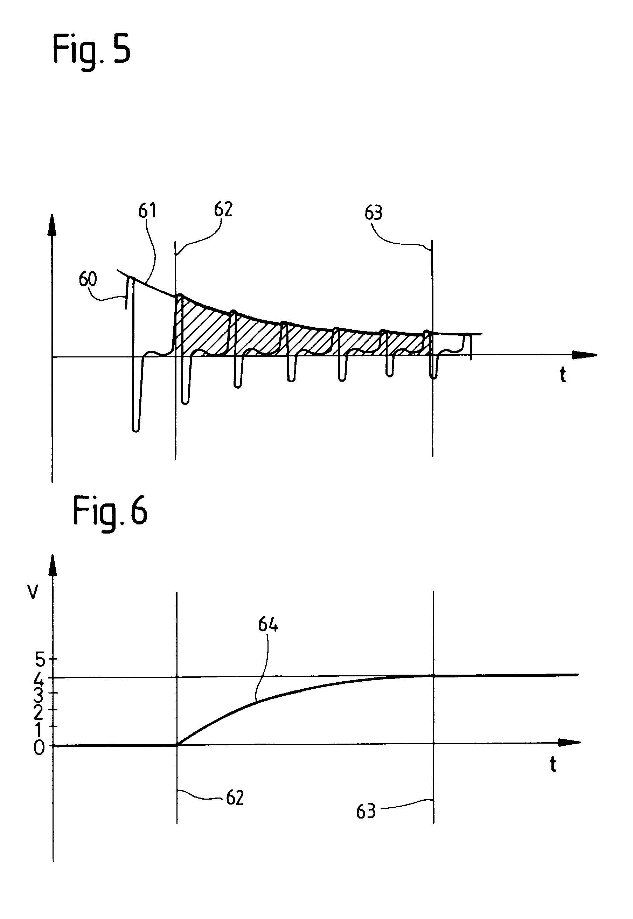

La sortie du filtre passe-bande 24 est reliée au détecteur d'enveloppe 25 qui, bien qu'il reçoit pas essentiel à l'invention, redresse chaque signal d'écho en éliminant toute composante alternative, ce filtre augmentant la précision de l'intégration qui doit être exécutée. La figure 5 montre un signal d'écho 60, mesuré à la sortie du filtre passe-bande 24 et ayant une enveloppe 61 qui est détectée par le détecteur d'enveloppe 25. Par la suite, le signal d'enveloppe 61 ainsi détecté est amplifié par l'amplificateur 23 avec un facteur de gain déterminé par le micro-processeur 28 par l'intermédiaire d'un bus de données 34 à 8 bits.

Le signal d'enveloppe amplifié 61 est ensuite appliqué à l'intégrateur 26 qui est relié à la sortie du circuit d'horloge 20 par l'intermédiaire du circuit à retard 30. Le circuit à retard 30 permet à l'intégrateur 30 d'intégrer le signal d'enveloppe 61 pendant une fenêtre temporelle prédéterminée. Cette fenêtre temporelle peut avoir une durée inférieure à 10 µsecs, est ouverte pendant un délai ajustable entre 2 et 50 µsecs.après que chaque impulsion est envoyée au circuit de mise en forme 21. Typiquement, la fenêtre temporelle peut être ouverte entre 18 et 23 µsecs après chaque impulsion. Pour établir ce retard, le circuit à retard 30 compte les impulsions du circuit d'horloge 20 produites à la suite de l'émission de chaque impulsion ultrasonore 31 par le transducteur 10. Les instants auxquels cette fenêtre temporelle est ouverte et fermée sont désignés par les références 62 et 63 respectivement sur la figure 5.

La figure 6 montre une représentation graphique de la tension 64 présente à la sortie de l'intégrateur 26 par rapport au temps. Comme on peut le voir sur cette figure 6, la sortie de l'intégrateur 26 est remise à zéro volts après l'émission de chaque impulsion ultrasonore 31 par le transducteur 10. A l'ouverture 62 de la fenêtre temporelle définie par le circuit à retard 30, la tension 64 augmente en fonction de l'intégrale du signal d'enveloppe 61. Lorsque à l'instant 63 la fenêtre temporelle se ferme, l'intégrateur du signal d'enveloppe 61 cesse puis la tension 64 reste constante avec, une valeur représentant la région hachurée de la figure 5, jusqu'à ce qu'elle soit de nouveau remise à zéro.

Après la fermeture de chaque fenêtre temporelle, le convertisseur analogique/numérique 27 convertit la tension à la sortie de l'intégrateur 26 en une valeur numérique qui est transmise au micro-processeur 28 par l'intermédiaire d'un bus de données 35 à 8 bits. Ainsi, la sortie du circuit d'intégration 26 n'a à être lue qu'une fois par signal d'écho, ou dans cet exemple à une fréquence 0, de 2,56 kHz. Pour réduire encore plus les valeurs parasites, le micro-processeur 28 peut stocker un certain nombre de valeurs numériques et calculer la moyenne de ces valeurs. De préférence, les valeurs numériques stockées peuvent être consécutives. Le nombre de valeurs utilisées pour calculer cette valeur peut varier. Dans le mode d'exécution donné à titre d'exemple sur la figure 2, la moyenne de 256 valeurs consécutives peut être prise de sorte qu'avec une fréquence de répétition entre les impulsions incidentes ultrasonores de 2,56 kHz une valeur numérique moyenne est calculée à un rythme de 10 par seconde.

Le micro-processeur 28 ajuste la valeur de gain fournie à l'amplificateur 23 sur la base de chaque valeur numérique pour maintenir la tension à la sortie de l'intégrateur 26, après l'instant 63, à une valeur en régime permanent. Comme le montre la figure 6, cette valeur en régime permanent formée de préférence une portion substantielle de la tension d'entrée à pleine échelle du convertisseur analogique/numérique 27 de manière à augmenter au maximum la résolution de lecture. La tension d'entrée à pleine échelle du convertisseur analogique/numérique 27 peut être, par exemple, de 5 volts tandis que la valeur en régime permanent à la sortie de l'intégrateur peut être de 4 volts.

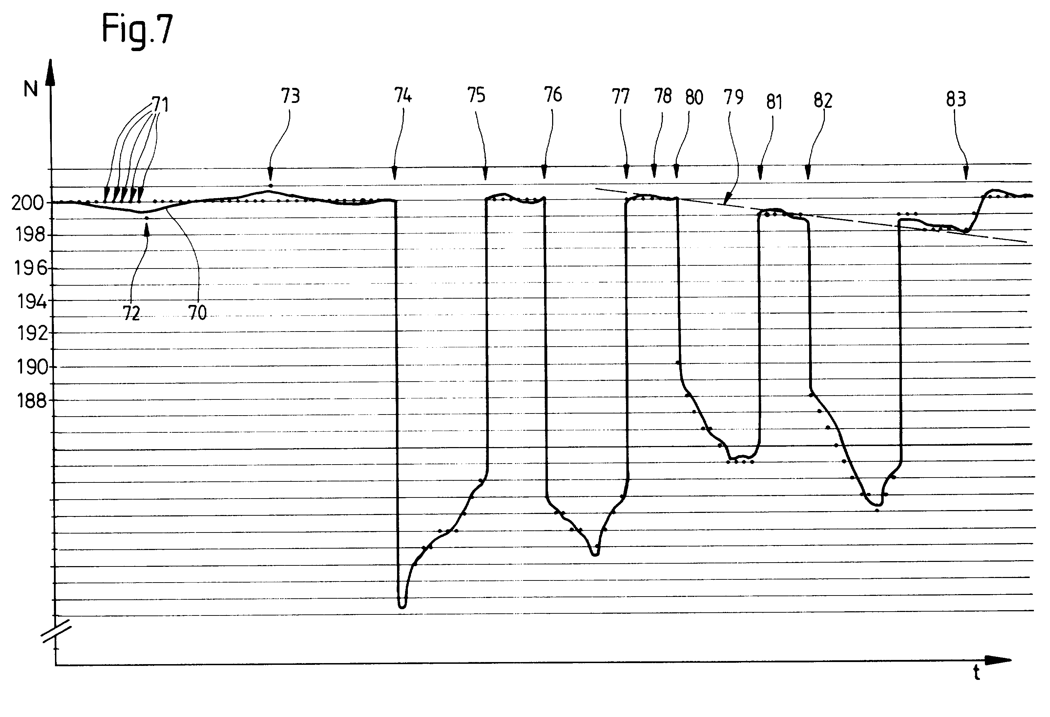

La figure 7 montre une représentation graphique du signal analogique à la sortie de l'intégrateur 26, symbolisé par le trait plein 70, et des valeurs numériques moyennes calculées par le micro-processeur 28, symbolisées par les points 71. Le convertisseur analogique/numérique 26 est réglé pour que la tension d'entrée à pleine échelle corresponde à une valeur numérique de 2⁸ - 1 = 255 (le bus 35 ayant 8 bits), et pour qu'une tension d'entrée nulle corresponde à une valeur numérique 0. La valeur en régime permanent de l'intégrale 64, qui est lue à un instant situé après la fermeture 63 de la fenêtre temporelle pendant laquelle chaque signal d'écho est intégré, peut donc correspondre à une valeur numérique, par exemple, de 200.

Si de l'eau ou un autre corps étranger n'est pas présent sur la surface extérieure 2 du pare-brise 1 et si la température ambiante est constante, la sortie 70 du convertisseur analogique/numérique 26 et les valeurs numériques moyennes 71 correspondes calculées par le micro-processeur 28, ne changent pas.

Si la température ambiante du pare-brise 1 ou les caractéristiques de fonctionnement du circuit 11 varient, le signal analogique 70 et sa valeur numérique moyenne correspondante 71 peuvent s'écarter temporairement de leur valeur régime permanent. Une telle situation est représentée à la figure 7 par les écarts aux instants 72 et 73. En raison de l'inertie thermique du pare-brise 1 et/ou, le cas échéant de la dérive graduelle normale des caractéristiques de fonctionnement du circuit 11 les écarts 72 et 73 sont relativement lents. L'écart des valeurs numériques moyennes consécutives calculées par le micro-processeur 28 par rapport à la valeur en régime permanent de 200, peut être de l'ordre de 0 à 2 seulement. Le micro-processeur 28 est apte à ajuster la valeur de gain imposée au circuit d'amplification 23 par une quantité fixe, seulement lorsqu'une nouvelle valeur numérique moyenne 71 est calculée. Cette quantité fixe peut correspondre au bit du point le plus faible de la valeur de gain à 8 bits, et elle est fixée de manière à compenser à peu près, voire complètement les petits écarts. Ainsi les valeurs numériques moyennes 71 peuvent être réglées autour de la valeur en régime permanent de 200.

Cependant, si une ou plusieurs gouttes d'eau 33, tombent sur la surface extérieure 2 du pare-brise 1, il se reproduit une atténuation importante et immédiate de l'amplitude des impulsions des signaux d'écho du transducteur 10 et donc une baisse rapide des valeurs numériques moyennes successives, comme illustré par l'écart à l'instant 74. Cet écart par rapport à la valeur en régime permanent de 200, peut être de l'ordre 5 à 150, en fonction de la quantité d'eau présente à l'endroit où la mesure est faite.

Le micro-processeur 28 envoie un signal logique haut au circuit de puissance 29 quand deux valeurs numériques moyennes successives diffèrent l'un de l'autre plus d'une valeur de seuil prédéterminée, par exemple, 4. En réponse à ce signal logique haut, le circuit de puissance 29 alimente le moteur 7 qui par suite entraîne les balais 5 et 6 sur la surface extérieure 2 du pare-brise 1.

Pour rendre le dispositif de détection ultrasonore moins sensible au changement du gain de l'amplificateur, le micro-processeur 28 peut être adapté pour compenser un écart quelconque entre des valeurs numériques moyennes successives résultant d'un changement du gain de l'amplificateur 23. Par exemple, si le gain de l'amplificateur 23 est modifié entre les opérations de calcul de deux valeurs numériques moyennes successives, le micro-processeur 28 peut modifier la première valeur numérique moyenne en la multipliant par le rapport du nouveau gain au gain précédent. Par conséquent, une comparaison entre la deuxième valeur numérique moyenne et cette première valeur numérique moyenne modifiée, permet la mesure de l'écart entre ces valeurs, tandis que l'on ignore un composant quelconque qui résulte d'un changement du gain de l'amplificateur 23.

Ayant détecté ainsi la présence d'eau ou d'un autre corps étranger sur le pare-brise, le micro-processeur 28 cesse d'ajuster la valeur de gain fournie à l'amplificateur 23. A l'instant 75, après la détection de l'écart à l'instant 74, les balais 5 et 6 essuyent le pare-brise et enlèvent l'eau de l'endroit de mesure. A cet instant 75, les valeurs numériques moyennes 71 se trouvent à nouveau à une valeur située autour de la valeur en régime permanent de 200.

A l'instant 76, de l'eau tombée de nouveau sur le pare-brise. Le micro-processeur 28 détecte que la variation entre des valeurs numériques moyennes successives est supérieure à la valeur de seuil de 4, et par conséquent les balais 5 et 6 continuent de fonctionner. A l'instant 77, de l'eau est de nouveau enlevée de l'endroit de mesure et les valeurs numériques moyennes 71 se trouvent à une valeur située près la valeur en régime permanent.

En comparant chaque valeur numérique moyenne 71 avec la valeur numérique moyenne précédente, le dispositif de détection ultrasonore de la présente invention est capable de détecter avec précision l'introduction de corps étrangers sur une vitre ou pare-brise même si d'autres paramètres concernés varient avec le temps, comme par exemple la température ambiante. A l'instant 78, on a représenté un changement de la température du pare-brise 1. Ce changement peut modifier le taux d'atténuation de l'amplitude des impulsions de chaque signal d'écho, ce qui peut donc affecter la valeur en régime permanent des valeurs numériques moyennes calculées par le micro-processeur 28. C'est pourquoi cette valeur en régime permanent peut dériver avec le temps, ce qui est représenté par la ligne en pointillés 79. Cependant, la détection d'une différence entre des valeurs numériques moyennes successives aux instants 80 et 81 permet au micro-processeur de continuer à faire fonctionner les balais 5 et 6 afin d'enlever l'eau du pare-brise 1.

A l'instant 82, l'eau qui a provoqué le changement à l'instant 81 est enlevée du pare-brise 1 et la valeur numérique moyenne se trouve à nouveau à une valeur en régime permanent 79. Après un intervalle prédéterminé pouvant correspondre par exemple au calcul de 20 valeurs numériques moyennes (i.e. 2 secondes), si aucune changement n'est détecté supérieur à la valeur de seuil 4, le micro-processeur 28 recommence à ajuster les valeurs de gain imposées fournies à l'amplificateur 23. Comme on peut le voir à l'instant 83, les valeurs numériques moyennes ne varient plus en fonction du changement de la température ambiante du pare-brise, mais retournent à une valeur située autour de leur valeur en régime permanent de 200.

On comprendra que diverses modifications et/ou adjonctions peuvent être faites au dispositif de détection ultrasonore de la présente invention sans en affecter la portée qui est définie dans les revendications annexées.

Par exemple, on peut concevoir un dispositif de détection ultrasonore selon la présente invention en inversant les positions de l'amplificateur 23 et de l'intégrateur 26 par rapport à celles qui occupent ces composants dans le schéma de la figure 2. Ainsi, les signaux d'écho du transducteur 10 peuvent d'abord être intégrés dans une fenêtre temporelle sélectionnée, puis être amplifiés par l'amplificateur 23, le gain de ce dernier étant modifié afin de maintenir la valeur intégrée à la sortie du circuit de l'intégrateur 26 à une valeur en régime permanent.

## Revendications

1. Dispositif de détection ultrasonore destiné à détecter la présence de corps étrangers, comme de l'eau, sur une vitre, tel que le pare-brise d'un véhicule, comprenant :
- des moyens transducteurs (10) pour émettre une séquence d'impulsions ultrasonores (31) se propageant dans l'épaisseur de ladite vitre (1) et pour recevoir une série d'impulsions réfléchies (32) résultant de chacune desdites impulsions ultrasonores, les impulsions réfléchies dans chacune desdites séries ayant une amplitude qui s'atténue à un taux variant en fonction de la présence desdits corps étrangers (33) sur la vitre, lesdits moyens transducteurs (10) produisant un signal d'écho (40,50) représentant chacune desdites séries d'impulsions réfléchies,
caractérisé en ce qu'il comprend en outre des moyens d'amplification (22) pour amplifier lesdits signaux d'écho (40,50) avec un gain déterminé, des moyens d'intégration (26) pour intégrer chacun desdits signaux d'écho (40,50) amplifiés pendant un intervalle de temps prédéterminé (62,63) afin de produire une valeur d'intégrale, des moyens de commande d'amplification (27,28) pour mesurer ladite valeur d'intégrale et pour déterminer ledit gain afin de maintenir ladite valeur d'intégrale à une valeur en régime permanent, et des moyens (29) pour mesurer l'écart temporel de ladite valeur d'intégrale par rapport à ladite valeur en régime permanent et pour déterminer si ledit écart temporel est supérieur à un seuil prédéterminé.

2. Dispositif de détection ultrasonore selon la revendication 1, caractérisé en ce que lesdits moyens de commande d'amplification (27,28) comprennent des moyens (28) pour stocker lesdites valeurs d'intégrale d'un nombre prédéterminé de signaux d'écho et pour calculer la moyenne de ces valeurs d'intégrale (40,50), ledit gain étant déterminé selon la moyenne desdites valeurs d'intégrale.

3. Dispositif de détection ultrasonore selon la revendication 2, caractérisé en ce que les signaux d'écho formant ledit nombre prédéterminé de signaux d'écho se suivent les uns les autres.

4. Dispositif de détection ultrasonore selon l'une quelconque des revendications précédentes, caractérisé en ce qu'il comprend en outre un détecteur d'enveloppe (25) pour recevoir lesdits signaux d'écho (40,50) et pour fournir leur enveloppe (61) auxdits moyens d'intégration (26) pour qu'elle puisse être intégrée.

5. Dispositif de détection ultrasonore selon l'une quelconque des revendications 1 à 3, caractérisé en ce qu'il comprend en outre un détecteur d'enveloppe (25) pour recevoir lesdits signaux d'écho (40,50) et pour fournir l'enveloppe (61) desdits signaux d'écho aux moyens d'amplification (23) pour qu'elle puisse être amplifiée.

6. Dispositif de détection ultrasonore selon l'une quelconque des revendications précédentes, caractérisé en ce que lesdits moyens de commande d'amplification (27,28) comprennent un convertisseur analogique/numérique (27) pour produire une valeur numérique représentant ladite valeur d'intégrale, et des moyens (28) pour calculer la moyenne des valeurs numériques correspondant à un nombre prédéterminé de signaux d'écho.

7. Dispositif de détection ultrasonore selon la revendication 6, caractérisé en ce que lesdits moyens de mesure d'écart (29) comprennent des moyens pour mesurer la différence entre les valeurs numériques moyennes successives et pour déterminer si ladite différence est supérieure à une valeur numérique prédéterminée.

8. Dispositif de détection ultrasonore selon la revendication 7, caractérisé en ce que lesdits moyens de mesure d'écart (29) comprennent en outre des moyens multiplicateurs pour multiplier chaque valeur numérique moyenne par une valeur représentant le rapport du gain déterminé pour cette valeur numérique moyenne, au gain déterminé pour la valeur numérique moyenne suivante, lesdits moyens multiplicateurs permettant de mesurer l'écart entre ladite valeur numérique moyenne multipliée et ladite valeur numérique moyenne suivante.

9. Dispositif de nettoyage à commande automatique d'une vitre tel qu'un pare-brise de véhicule ayant un dispositif de détection ultrasonore selon l'une quelconque des revendications précédentes, caractérisé en ce qu'il comprend en outre des moyens de nettoyage (3) pour nettoyer une zone prédéterminée de la surface extérieure de ladite vitre, des moyens d'entraînement (7) pour entraîner lesdits moyens de nettoyage (3), et pour faire fonctionner lesdits moyens de nettoyage (3) en réponse à une indication de corps étrangers sur la surface extérieure (2) de la vitre.

10. Dispositif de nettoyage selon la revendication 9, caractérisé en ce que ladite vitre est un pare-brise (1), lesdits moyens de nettoyage comprenant un ensemble d'essuie-glaces (3) pour nettoyer la surface extérieure du pare-brise (1).

## Claims

1. Ultrasonic detection device for detecting the presence of foreign bodies such as water on a window, such as a windscreen of a vehicle, comprising :
- transducer means (10) for emitting a sequence of ultrasonic pulses (31) propogating within the thickness of said window (1) and for receiving a series of reflected pulses (32) resulting from each said ultrasonic pulse, the reflected pulses in each said series having an amplitude which decreases in time at a rate which varies as a function of the presence of said foreign bodies (33) on said window, said transducer means (10) producing an echo signal (40,50) representative of each said series of reflected pulses,
characterized in that it further comprises amplifier means (22) for amplifying said echo signals (40,50) by a selectable gain, integration means (26) for integrating each of said amplified echo signals (40,50) during a selected time period (62,63) so as to produce an integral value, amplifier control means (27,28) for measuring said integral value and selecting said gain so as to maintain said integral value at a steady-state value, and means (29) for measuring the temporal deviation of said integral value from said steady-state value and for determining if said temporal deviation is greater than a predetermined threshold value.

2. Ultrasonic detection device according to claim 1, characterized in that said amplifier control means (27,28) comprises means (28) for storing and averaging said integral values of a predetermined number of echo signals (40,50), said gain being selected according to the average of said integrated values.

3. Ultrasonic detection device according to claim 2, characterized in that the echo signals forming said predetermined number of echo signals are consecutive.

4. Ultrasonic detection device according to any one of the preceding claims, characterized in that it further comprises an envelope detector (25) for receiving said echo signals (40,50) and for supplying the envelope (61) of said echo signals to said integration means (26) for integration.

5. Ultrasonic detection device according to any one of claims 1 to 3, characterized in that it further comprises an envelope detector (25) for receiving said echo signals (40,50) and for supplying the envelope (61) of said echo signals to said amplifier means (23) for amplification.

6. Ultrasonic detection device according to any one of the preceding claims, characterized in that said amplifier control means (27,28) comprises an analog/digital converter (27) for producing a digital value representative of said integral value, and means (28) for averaging the digital values corresponding to a predetermined number of echo signals.

7. Ultrasonic detection device according to claim 6, characterized in that said deviation measuring means (29) comprises means for measuring the difference between consecutive ones of said averaged digital values and determining if said difference is greater than a predetermined digital quantity.

8. Ultrasonic detection device according to claim 7, characterized in that said deviation measuring means (29) further comprise multiplication means for multiplying each averaged digital value by a value representative of the relation between the selected gain for that averaged digital value and the selected gain for the successive averaged digital value, said multiplication means enabling the measurement of the deviation between said multiplied averaged digital value and said successive averaged digital value.

9. Automatically controlled window cleaning system such as a windscreen of a vehicle having an ultrasonic detection device according to any one of the preceding claims, characterized in that it further comprises cleaning means (3) for cleaning a defined area on the exterior surface of said window, driving means (7) for driving said cleaning means (3), and for causing the operation of said cleaning means (3) in response to an indication of the presence of foreign bodies on the exterior surface (2) of said window.

10. Cleaning system according to claim 9, characterized in that said window is a motor vehicle windscreen (1), and said cleaning means comprising a windscreen wiper assembly (3) for cleaning the exterior surface (2) of said windscreen (1).

## Patentansprüche

1. Ultraschall-Erfassungsvorrichtung, bestimmt zum Erfassen des Vorhandenseins von Fremdkörpern, wie Wasser, auf einer Scheibe, etwa der Windschutzscheibe eines Fahrzeugs, umfassend:
- Wandlermittel (10) zum Aussenden einer Sequenz von Ultraschallimpulsen (31), die sich in der Dicke der Scheibe (1) ausbreiten, und zum Empfang einer Serie von reflektierten Impulsen (32), hervorgerufen durch jeden der Ultraschallimpulse, wobei die reflektierten Impulse in jeder Serie eine Amplitude aufweisen, die mit einem variablen Maß gedämpft wird, das von dem Vorhandensein der Fremdkörper (33) auf der Scheibe abhängt, welche Wandlermittel (10) ein jede der Serien von reflektierten Impulsen repräsentierendes Echosignal (40, 50) erzeugen, dadurch gekennzeichnet, daß sie ferner Verstärkungsmittel (22) für das Verstärken der Echosignale (40, 50) mit einem bestimmten Verstärkungsfaktor, Integriermittel (26) für das Integrieren jedes der verstärkten Echosignale (40, 50) über ein bestimmtes Zeitintervall (62, 63) zum Erzeugen eines Integralwertes, Verstärkungssteuermittel (27, 28) zum Messen des Integralwertes und zum Bestimmen des Verstärkungsfaktors, um den Integralwert auf einem Dauerbetriebswert zu halten, und Mittel (29) zum Messen der zeitlichen Abweichung des Integralwertes relativ zu dem Dauerbetriebswert und zum Bestimmen, ob die zeitliche Abweichung über einer vorbestimmten Schwelle liegt, umfaßt.

2. Ultraschall-Erfassungsvorrichtung nach Anspruch 1, dadurch gekennzeichnet, die Verstärkungssteuermittel (27, 28) Mittel (28) zum Speichern der Integralwerte einer vorbestimmten Anzahl von Echosignalen und zum Berechnen des Mittelwertes dieser Integralwerte (40, 50) umfassen, wobei der Verstärkungsfaktor entsprechend dem Mittelwert der Integralwerte bestimmt wird.

3. Ultraschall-Erfassungsvorrichtung nach Anspruch 2, dadurch gekennzeichnet, daß die die vorbestimmte Anzahl von Echosignalen bildenden Echosignale einander folgen.

4. Ultraschall-Erfassungsvorrichtung nach einem der vorangehenden Ansprüche, dadurch gekennzeichnet, daß sie ferner einen Hüllkurvendetektor (25) für den Empfang der Echosignale (40, 50) und zum Liefern ihrer Hüllkurve (61) an die Integriermittel (26) umfaßt, damit sie integriert werden kann.

5. Ultraschall-Erfassungsvorrichtung nach einem der vorangehenden Ansprüche, dadurch gekennzeichnet, daß sie ferner einen Hüllkurvendetektor (25) für den Empfang der Echosignale (40, 50) und zum Liefern der Hüllkurve (61) der Echosignale an Verstärkungsmittel (23) umfaßt, damit sie verstärkt werden kann.

6. Ultraschall-Erfassungsvorrichtung nach einem der vorangehenden Ansprüche, dadurch gekennzeichnet, daß die Verstärkungssteuermittel (27, 28) einen Analog-Digital-Umsetzer (27) zum Erzeugen eines den Integralwert repräsentierenden numerischen Wertes und Mittel (28) zum Berechnen des Mittelwerts der numerischen Werte entsprechend einer vorbestimmten Zahl von Echosignalen umfassen.

7. Ultraschall-Erfassungsvorrichtung nach Anspruch 6, dadurch gekennzeichnet, daß die Mittel (28) zum Messen der zeitlichen Abweichung Mittel zum Messen der Differenz zwischen aufeinanderfolgenden mittleren numerischen Werten und zum Bestimmen, ob die Differenz größer als ein vorbestimmter numerischer Wert ist, umfassen.

8. Ultraschall-Erfassungsvorrichtung nach Anspruch 7, dadurch gekennzeichnet, daß die Mittel zum Messen der Abweichung (28) ferner Multipliziermittel zum Multiplizieren jedes mittleren numerischen Wertes mit einem Wert umfassen, der das Verhältnis des für diesen mittleren numerischen Wert bestimmten Verstärkungsfaktors zu dem Verstärkungsfaktor für den folgenden mittleren numerischen Wert repräsentiert, welche Multipliziermittel die Messung der Abweichung zwischen dem multiplizierten mittleren numerischen Wert und dem folgenden mittleren numerischen Wert ermöglichen.

9. Automatisch gesteuerte Reinigungsvorrichtung einer Scheibe, wie der Windschutzscheibe eines Fahrzeugs, mit einer Ultraschall-Erfassungsvorrichtung nach einem der vorangehenden Ansprüche, dadurch gekennzeichnet, daß sie ferner Reinigungsmittel (3) für das Reinigen einer vorbestimmten Zone der Außenseite der Scheibe, Antriebsmittel (7) für das Antreiben der Reinigungsmittel (3), und um die Reinigungsmittel (3) in Reaktion auf eine Indikation von Fremdkörpern auf der Außenseite (2) der Scheibe arbeiten zu lassen, umfaßt.

10. Reinigungsvorrichtung nach Anspruch 9, dadurch gekennzeichnet, daß die Scheibe eine Windschutzscheibe (1) ist und die Reinigungsmittel eine Scheibenwischergruppe (3) für das Reinigen der Außenseite der Windschutzscheibe umfassen.
